# EUROPEAN PATENT SPECIFICATION

(11) **EP 2 173 119 B1**
(45) Date of publication and mention of the grant of the patent: **04.01.2017**
(21) Application number: 08017387.5
(22) Date of filing: 02.10.2008
(51) Int. Cl.: H04L 12/14, H04W 48/14, H04W 4/14

(54) **Control of service parameters of a multimedia communication related to a localised service area**
Steuerung der Dienstparameter einer Multimediaverbindung in Abhängigkeit des Aufenthaltsortes
Contrôle des paramètres de service d'une communication multimédia en fonction de la localisation

(43) Date of publication of application: 07.04.2010
(73) Proprietor: Vodafone Holding GmbH, 40213 Düsseldorf (DE)
(72) Inventor: Lee, Sabrina, 40219 Düsseldorf (DE); Hartl, Mike, 40878 Ratingen (DE)
(74) Representative: Ring & Weisbrodt

(56) References cited:
- WO-A-00/18156
- WO-A-01/95655
- WO-A-02/07474
- US-A1- 2002 077 130
- US-A1- 2008 057 915
- US-A1- 2008 182 553
- US-B1- 6 516 193
- US-B1- 6 721 572
- "Digital cellular telecommunications system (Phase 2+); Support of Localised Service Area (SoLSA); Stage 2 (3GPP TS 43.073 version 6.0.0 Release 6); ETSI TS 143 073" ETSI STANDARDS, LIS, SOPHIA ANTIPOLIS CEDEX, FRANCE, vol. 3-CN4, no. V6.0.0, 1 December 2004 (2004-12-01), XP014028295 ISSN: 0000-0001
- "3rd Generation Partnership Project; Technical Specification Group Services and System Aspects; Support of Localised Service Area (SoLSA); Service description; Stage 1 (3G TS 22.043 Release 1999)", 3GPP STANDARD; 3G TS 22.043, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V3.1.0, 1 June 2000 (2000-06-01), pages 1-12, XP050360529,

## Description

The present invention relates to a method for controlling service parameters for the use of a communication connection for exchanging words (speech/voice) and/or data between subscribers, wherein one subscriber uses a mobile terminal that is operable in a mobile network forming a service area having a cellular network structure composed of radio cells for the communication connection and at least one preferred area is setup by the mobile network, which area is at least partially located in the service area of the mobile network, in which preferred area one can setup separately adjustable service parameters for the use of a communication connection for at least one subscriber, if this one is staying in the preferred area.

Furthermore, the invention relates to a network node in a mobile network forming a service area having a cellular network structure composed of radio cells, in particular a mobile network according to a GSM, GPRS and/or UMTS radio network standard, which node is at least partially involved in a voice communication connection between subscribers and is designed and/or adapted to at least partially carry out a method according to the invention.

Numerous realizations of methods, systems and devices for the use control of services in mobile networks are known in the state of the art, in particular in the field of charging fees for communication connections in mobile networks, wherein the consideration of
the local position of a mobile terminal of a subscriber, who can change his location in the mobile network, is used for the user individual adaptation of the fee structure for certain locations in the service area of the communication network, cf. for example US 5,568,153 or DE 197 31 461 C1. The implementations known in this context in the state of the art permit to determine at least one preferred area in the service area of the mobile network for single subscribers, which preferred area is usually defined by a post address of a subscriber or the geographic coordinates thereof. The preferred area in the service area of the mobile network is then composed of a single radio cell or a group of coherent radio cells, in the radio service area of which the preferred area is located. Herein, the individual subscribers, who can change the location, or radio cells that are allocated to their mobile terminals are usually memorized in a subscriber database of the mobile network. During initiation of a service for communication connections it is determined by means of a localization device, whether the subscriber or his mobile terminal is located inside the preferred area or outside the preferred area. Dependent on the actual local position of the subscriber or his mobile terminal, the corresponding rate of fees will be activated in the mobile network and used for the account by means of the account system.

Methods, systems and devices for the use control of services in mobile networks are furthermore known from EP 1 732 322 A2, EP 1 732 337 A2, EP 1 732 343 A2, EP 1 732 344 A2, EP 1 732 345 A2 and/or EP 1 737 259 A2, to the disclosures of which it is explicitly made reference herewith.

US 2008/0182553 A1 discloses an over the air (OTA) prepaid system, and a corresponding method. The system and the method allow wireless connectivity when a wireless network would typically reject a user, such as when the user's profile cannot be validated. In wireless networks, unrecognized users are denied service due to the inability of the network to collect funds from the user for the services to be provided. When such a rejection scenario occurs, the OTA prepaid system automatically (no user interaction required) initiates the process of local account allocation.

The technical specification of the ETSI 3rd Generation Partnership Project (3GPP), entitled "Digital cellular telecommunication system (Phase 2+); Support of Localised Service Area (SoLSA); Stage 2 (3GPP TS 43.073 version 6.0.0 Release 6)", specifies the stage 2 description of the SoLSA service, different tariffs and different access rights depending on geographical location of the subscriber. In particular, the network operator can define a Localised Service Area, LSA, consisting of a cell or a number of cells. It is possible for the network operator to set certain characteristics/attributes per LSA. In addition it is proposed to realize a location based charging using LSA. Different charging can be applied with respect to different LSAs, which shall also include the possibility to change charging when moving between LSAs with different tariffs associated.

There is a permanent demand of new solutions for controlling service parameters for the use of a communication connection for exchanging words (speech/voice) and/or data between subscribers dependent on the local position of the subscriber in the mobile network, in particular with respect to more global advertising and/or customer binding measures for enterprises, organizations which offer or provide goods and/or services and/or such institutions that require advertising and/or customer binding measures.

Based upon this state of the art, it is the object of the invention to improve the control of service parameters for the use of a communication connection for exchanging words (speech/voice) and/or data between subscribers, in particular with respect to more global advertising and/or customer binding measures for enterprises, organizations which offer or provide goods and/or services and/or such institutions that require advertising and/or customer binding measures.

As technical solution the invention proposes a method for controlling service parameters for the use of a communication connection for exchanging words (speech/voice) and/or data between subscribers, wherein one subscriber uses a mobile terminal that is operable in a mobile network forming a service area having a cellular network structure composed of radio cells for the communication connection and at least one preferred area is setup by the mobile network, which area is at least partially located in the service area of the mobile network, in which preferred area one can setup separately adjustable service parameters for the use of a communication connection for at least one subscriber, if this one is staying in the preferred area, which method is characterized in that a device transmits and/or delivers an identifier for the control of separately adjustable service parameters for the use of a communication connection in the preferred area to at least one subscriber, the subscriber transmits the identifier to the mobile network by means of a message service of the mobile network before and/or upon initiation of a communication connection, the mobile network allocates the identifier to the MSISDN of the subscriber, sets up and activates separately adjustable service parameters for the use of a communication connection in the preferred area corresponding to the transmitted identifier, and the activated service parameters will be used for the communication connection if a communication connection is initiated when the subscriber is staying in the preferred area.

The invention makes use of the knowledge that the control of service parameters for the use of a communication connection for exchanging words (speech/voice) and/or data between subscribers, in particular with respect to more global advertising and/or customer binding measures for enterprises, organizations which offer or provide goods and/or services and/or such institutions that require advertising and/or customer binding measures, can be improved, if the subscriber receives an identifier for the control of separately adjustable service parameters for the use of a communication connection in the preferred area by a device, which identifier allows the subscriber, after set-up and/or activation by the subscriber himself, to use corresponding separately adjustable service parameters for the use of a communication connection, when he is staying in the preferred area.

Advantageously, corresponding separately adjustable service parameters for the use of a communication connection in the preferred area allow the subscriber a use of communication connections at reduced charges or clear of charges. Thanks to corresponding realizations, quasi a sponsoring of communication connections is given and the sustainability, the efficiency and/or the obtainable success of more global advertising and/or customer binding measures for enterprises, organizations which offer or provide goods and/or services and/or such institutions that require advertising and/or customer binding measures are further improved.

An advantageous embodiment of the invention provides that the subscriber initiates the establishment of the communication connection. Thus, a subscriber who is staying in the preferred area can advantageously use the set up and activated separately adjustable service parameters for the use of a communication connection for communication connections that go out from the terminal in the preferred area, in particular for quasi sponsored uses of communication connections at reduced charges or clear of charges. Thus, for example customers of a café or a similar Institution can phone or send messages according to a short message service (SMS) of the mobile network at reduced charges or clear of charges as subscriber of a communication connection, when they are staying in this café.

Another advantageous embodiment of the invention provides that the identifier and/or the service parameters that can be activated by means of the identifier for the use of a communication connection have a limited valid time. Another embodiment of the invention is characterized by a valid time with respect to one month, one week, one day and/or within a range comprised between one minute and 60 minutes. Thus, other realization possibilities with respect to advertising and/or customer binding measures are made possible and further improvements of the advertising and/or customer binding measures are obtained. Another advantageous embodiment of the invention provides that the service parameters that can be activated by means of the identifier for the use of a communication connection are provided for sending messages, preferably SMS or MMS, which can then be sent at reduced charges and/or clear of charges. Advantageously, a predefined number of messages at reduced charges and/or clear of charges is provided with the identifier for being sent during the stay In the preferred area, preferably a number of messages in a range comprised between 1 and 15 messages.

According to another proposal of the invention, the institution is at least partially situated in the preferred area. Advantageously, the institution is an institution that offers or provides goods and/or services. Thanks to these measures according to the invention, taken individually and/or in combination with each other, a further improvement of advertising and/or customer binding measures can be obtained, In particular if subscribers indirectly and/or directly connect the institution and the advantageous communication enabled or sponsored by this one to a shop, a café or such a trade institution of goods and/or services.

In another embodiment of the invention it is provided that the subscriber transmits the identifier by means of a short message service (SMS (Short Message Service)) of the mobile network to the mobile network. Herein, the mobile network allocates the identifier that enables an advantageous communication and that is used for controlling separately adjustable service parameters for the use of a communication connection in the preferred area to the MSISDN allocated by the mobile network to the subscriber or to the SIM used by his terminal for getting access to the mobile network. The mobile network then uses the allocation for activating separately adjustable service parameters for the use of a communication connection in the preferred area of the subscriber.

Another advantageous embodiment of the invention provides that when the separately adjustable service parameters are activated, the mobile terminal of the subscriber will exclusively use the radio cell or radio cells allocated to the preferred area for the communication connection. Herein, the devices of the mobile network forming the service area and in particular the preferred area and/or the mobile terminal of the subscriber are advantageously encouraged to exclusively use the radio cell or the radio cells allocated to the preferred area for communication connections of the subscriber.

In another embodiment of the invention, the use of activated service parameters for the communication connection is signalized to the subscriber within the scope of the communication connection. Advantageously, the signalization is realized in an optical and/or acoustic manner by means of the mobile terminal of the subscriber. In an advantageous embodiment of the invention, the signalization is realized by an acoustic reproduction of a voice message. A preferred embodiment of the invention is characterized in that the voice message at least contains one information, preferably advertising information, with respect to the institution that transmits and/or delivers the identifier. The signalization is advantageously realized before and/or during the establishment of the communication connection and/or during the established communication connection.

Another embodiment of the invention provides that the communication connection will be terminated if the subscriber leaves the preferred area.

In another advantageous embodiment of the invention, the use of the activated service parameters for the communication connection is deactivated when the subscriber leaves the preferred area. The communication connection will then be advantageously continued with service parameters for communication connections of the subscriber, which are valid outside the preferred area. Advantageously, the deactivation is signalized to the subscriber within the scope of the communication connection. According to the invention, the signalization is realized in optical and/or acoustic form by the mobile terminal of the subscriber. In another embodiment according to the invention, the signalization is realized by an acoustic reproduction of a voice message. In a preferred embodiment of the invention, the voice message at least contains one information, preferably advertising information, with respect to the institution that transmits and/or delivers the identifier. The signalization is advantageously realized during the established communication connection.

As technical solution of the initially mentioned problem, the present invention furthermore proposes a network node in a mobile network forming a service area having a cellular network structure composed of radio cells, in particular a mobile network according to a GSM, GPRS and/or UMTS radio network standard, which node is at least partially involved in a voice communication connection between subscribers and is designed and/or adapted to at least partially carry out a method according to the invention.

Advantageously, the network node according to the invention is a network node in a preferred area of the service area of the mobile network. In a most preferred embodiment of the invention, the network node is a network node of a micro- or pico-cell of the mobile network. The use of a micro- or pico-cell of the mobile network as network node according to the invention permits to establish a preferred area that is limited to a certain area of the service area of the mobile network, which preferred area can be advantageously allocated to in particular a special institution offering or providing goods and/or services.

Other details, characteristics and advantages of the invention will be explained in detail in the following by means of the exemplary embodiment represented in the figure of the drawing. Herein:
- Fig.: 1 is a schematic diagram showing an exemplary embodiment of a control according to the invention of service parameters for the use of a communication connection for exchanging words (speech/voice) and/or data between subscribers.

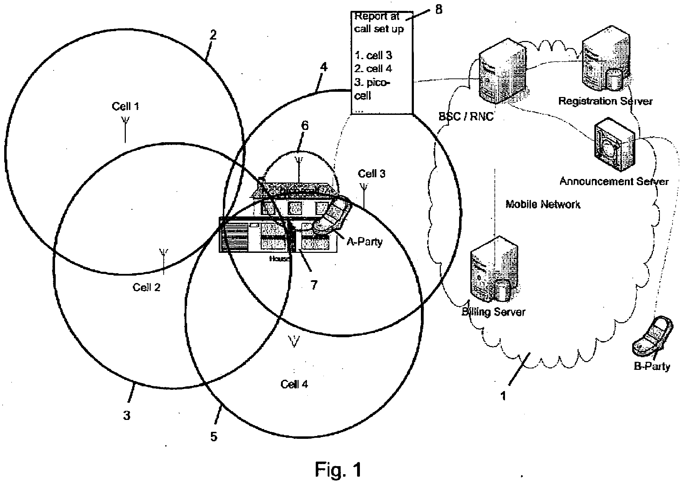

Fig. 1 shows a principal exemplary embodiment of a control according to the invention of service parameters for the use of a communication connection for exchanging words (speech/voice) and/or data between subscribers, party A and party B, In a mobile network 1 (here symbolically represented by a cloud) forming a service area having a cellular network structure composed of radio cells 2, 3, 4, 5 and 6 (here exemplarily: cell 1, cell 2, cell 3, cell 4 and pico cell) according to a GSM, GPRS and/or UMTS radio network standard. Herein, the subscribers party A and party B make respectively use of a mobile terminal party A and party B in form of a mobile phone that Is operable in the mobile network 1 for a communication connection. In fig. 1 the subscribers party A and party B are symbolically represented by the mobile phones party A and party B respectively used by them.

In the present case the subscriber party A is staying in a building (house) 7, for example a café or a so called fast-food restaurant. A pico cell 6 is installed and set up in the building 7, which pico cell in particular enables a communication connection via the mobile network 1 for subscribers, in the present case party A, who are staying In the building. Herein, the mobile phone of subscriber party A reaches the radio cells 2 (cell 1), 3 (cell 2), 4 (cell 3), 5 (cell 4) and 6 (pico cell) of the mobile network 1 for communication connections realized via the mobile network 1. Herein, the individual radio cells 2 (cell 1), 3 (cell 2), 4 (cell 3), 5 (cell 4) and 6 (pico cell) of the mobile network 1 can be reached by the mobile phone of the subscriber party A with different signal qualities and/or intensities. For a communication connection realized via the mobile network 1 such radio cell of the mobile network is usually selected that permits the respective mobile terminal of a subscriber to get the best signal quality or the best signal intensity for the communication connection. The information with respect to the radio cells that can be reached by the mobile terminal of the subscriber is transmitted to the mobile network by the mobile terminal within the scope of a so called call-set-up report for selecting the radio cell for the communication connection.

According to the invention, in the present case the subscriber party A will get an identifier from the building (house) 7 when he orders or buys a drink. The identifier can be for example handed over in form of an adhesive label on the drinking-cup of the acquired drink or a like information carrier handed over to the subscriber party A upon purchase of the drink by the trade institution staying in the building 7 when the subscriber purchases the drink. In the present case, the identifier allows setting up a preferred area for the subscriber party A in the service area of the mobile network 1. Herein, the identifier permits to control separately adjustable service parameters for the use of a communication connection in the preferred area, in particular a use of communication connections in the mobile network 1 that are initiated by the subscriber party A and that are free of charge and/or reduced in charge when the subscriber is staying in the preferred area.

In the present case, the subscriber party A transmits the identifier via the mobile network 1 (here exemplarily via the BSC/RNC (BSC: Base Station Controller); (RNC: Radio Network Controller) by means of a message, in the present case a SMS, to a service device (registration server) correspondingly provided for this by the mobile network 1 for setting up and/or activating preferred areas and/or service parameters for the use of communication connections in the preferred area. Herein, the radio service area of the pico cell 6 is set up as preferred area for the MSISDN of the subscriber party A. Furthermore, the corresponding information about the preferred area set up for the MSISDN of the subscriber party A is transmitted by a computing unit (billing server) provided by the mobile network 1 for account purposes and is used in connection with the so called CDR (CDR: Call Detail Record) for the account of communication connections of the subscriber party A.

If the subscriber party A is staying in the preferred area 6 defined by the pico cell 6 and set up and activated for the subscriber by transmission of the identifier to the mobile network 1, the pico cell 6 will be exclusively used for communication connections In the mobile network 1 independent from the fact whether one could obtain other signal qualities and/or intensities according to the call-set-up report for the mobile phone of the subscriber party A by means of other radio cells 2 (cell 1), 3 (cell 2), 4 (cell 3) or 5 (cell 4) of the mobile network 1.

If the subscriber party A, who Is staying in the preferred area 6 according to the radio service area of the pico cell 6, initiates a communication connection to a subscriber party B, the communication connection will be realized according to the activated separately adjustable service parameters in the preferred area. In the present case, the communication connection quasi sponsored by the Institution (café/fast food restaurant) in the building 7 is correspondingly signalized to the subscriber party A and preferably also to the subscriber party B by the respectively used mobile phone for increasing the advertising effect, In the present case by means of a voice message including an advertising information of the type: "The present call is free of charge for you. Enterprise X will bear the charges for you...", which will be inserted by a computing unit (Announcement Service) that is correspondingly provided by the mobile network 1 into the communication connection.

The exemplary embodiments of the invention represented in the figure of the drawing and described in connection with this one only serve for explaining the invention and are not limiting for this one.

### List of reference numerals:

- 1: mobile network
- 2: radio cell (cell 1) (mobile network (1))
- 3: radio cell (cell 2) (mobile network (1))
- 4: radio cell (cell 3) (mobile network (1))
- 5: radio cell (cell 4) (mobile network (1))
- 6: radio cell/pico cell (mobile network (1))
- 7: building (house)/institution (café/fast food restaurant)
- 8: call-set-up report

## Claims

1. A method for controlling service parameters for the use of a communication connection for exchanging words, such as speech/voice, and/or data between subscribers (A-Party, B-Party), wherein one subscriber (A-Party) uses a mobile terminal that is operable in a mobile network (1) forming a service area having a cellular network structure composed of radio cells (2, 3, 4, 5, 6) for the communication connection and at least one preferred area (6) is setup by the mobile network (1), which area is at least partially located in the service area of the mobile network (1), in which preferred area (6) one can setup separately adjustable service parameters for the use of a communication connection for at least one subscriber (A-Party), if this one is staying in the preferred area (6), wherein a device transmits and/or delivers an identifier for the control of separately adjustable service parameters for the use of a communication connection in the preferred area (6) to at least one subscriber (A-Party), the subscriber (A-Party) transmits the identifier to the mobile network (1) by means of a message service of the mobile network (1) before and/or upon initiation of a communication connection, the mobile network (1) allocates the identifier to the MSISDN of the subscriber (A-Party), sets up and activates separately adjustable service parameters for the use of a communication connection in the preferred area (6) corresponding to the transmitted identifier, and the activated service parameters will be used for the communication connection if a communication connection is initiated when the subscriber (A-Party) is staying in the preferred area (6).

2. A method according to claim 1, wherein the subscriber (A-Party) initiates the establishment of the communication connection.

3. A method according to claim 1 or to claim 2, wherein the identifier and/or the service parameters that can be activated by means of the identifier for the use of a communication connection have a limited time duration.

4. A method according to claim 3, wherein the time duration is one month, one week, one day and/or within a range comprised between one minute and 60 minutes.

5. A method according to one of the claims 1 through 4, wherein an institution where the subscriber (A-party) gets the identifier is at least partially placed in the preferred area (6).

6. A method according to one of the claims 1 through 4, wherein a device transmitting and/or delivering the identifier to the subscriber (A-Party) is allocated to an institution that offers or provides goods and/or services.

7. A method according to one of the claims 1 through 6, wherein the subscriber (A-Party) transmits the identifier by means of a short message service, SMS, of the mobile network (1) to the mobile network (1).

8. A method according to one of the claims 1 through 7, wherein when the separately adjustable service parameters are activated, the mobile terminal of the subscriber (A-Party) will exclusively use the radio cell or radio cells allocated to the preferred area (6) for the communication connection.

9. A method according to one of the claims 1 through 8, wherein the use of activated service parameters for the communication connection is signalized to the subscriber (A-Party) within the scope of the communication connection.

10. A method according to claim 9, wherein the signalization is realized in an optical and/or acoustic manner by means of the mobile terminal of the subscriber (A-Party).

11. A method according to claim 9 or claim 10, wherein the signalization is realized by an acoustic reproduction of a voice message.

12. A method according to claim 11, wherein the voice message at least contains one information, preferably advertising information, with respect to an institution that transmits and/or delivers the identifier.

13. A method according to one of the claims 9 through 12, wherein the signalization is realized before and/or during the establishment of the communication connection and/or during the established communication connection.

14. A method according to one of the claims 1 through 13, wherein the communication connection will be terminated if the subscriber (A-Party) leaves the preferred area (6).

15. A method according to one of the claims 1 through 14, wherein the use of the activated service parameters for the communication connection is deactivated when the subscriber (A-Party) leaves the preferred area (6).

16. A method according to claim 15, wherein the deactivation is signalized to the subscriber (A-Party) within the scope of the communication connection.

17. A method according to claim 16, wherein the signalization is realized in optical and/or acoustic form by the mobile terminal of the subscriber (A-Party).

18. A method according to claim 16 or claim 17, wherein the signalization is realized by an acoustic reproduction of a voice message.

19. A method according to claim 18, wherein the voice message at least contains one information, preferably advertising information, with respect to an institution that transmits and/or delivers the identifier.

20. A method according to one of the claims 16 through 19, wherein the signalization is realized during the established communication connection.

21. A network node for use in a mobile network (1) forming a service area having a cellular network structure composed of radio cells (2, 3, 4, 5, 6), in particular a mobile network (1) according to a GSM, GPRS and/or UMTS radio network standard, which node is at least partially involved in a voice communication connection between subscribers (A-Party, B-Party), **characterized in that** said node is designed and/or adapted to carry out a method according to one of the claims 1 through 20.

22. A network node according to claim 21, wherein this one is a network node in a preferred area (6) of the service area of the mobile network (1).

23. A network node according to claim 21 or claim 22, wherein this one is a network node of a micro or pico cell (6) of the mobile network (1).

## Patentansprüche

1. Verfahren zur Steuerung von Dienstparametern für die Nutzung einer Kommunikationsverbindung zum Austausch von Wörtern, wie Sprache/Stimme, und/oder Daten zwischen Teilnehmern (A-Party, B-Party), wobei ein Teilnehmer (A-Party) für die Kommunikationsverbindung ein in einem ein Versorgungsgebiet mit einer aus Funkzellen (2, 3, 4, 5, 6) aufgebauten zellularen Netzstruktur ausbildendes Mobilfunknetz (1) betreibbares mobiles Endgerät nutzt und seitens des Mobilfunknetzes (1) wenigstens ein sich zumindest teilweise im Versorgungsgebiet des Mobilfunknetzes (1) befindendes Vorzugsgebiet (6) eingerichtet ist, in welchem für wenigstens einen Teilnehmer (A-Party) bei Aufenthalt in dem Vorzugsgebiet (6) gesondert einstellbare Dienstparameter für die Nutzung einer Kommunikationsverbindung einrichtbar sind, wobei eine Einrichtung wenigstens einem Teilnehmer (A-Party) eine Kennung zur Steuerung von gesondert einstellbaren Dienstparametern für die Nutzung einer Kommunikationsverbindung in dem Vorzugsgebiet (6) übermittelt und/oder übergibt, der Teilnehmer (A-Party) vor und/oder mit der Initiierung einer Kommunikationsverbindung die Kennung mittels eines Nachrichtendienstes (SMS) des Mobilfunknetzes (1) an das Mobilfunknetz (1) übermittelt, das Mobilfunknetz (1) die Kennung der MSISDN des Teilnehmers (1) zuweist und gesondert einstellbare Dienstparameter für die Nutzung einer Kommunikationsverbindung in dem Vorzugsgebiet (6) entsprechend der übermittelten Kennung einrichtet und aktiviert, und die aktivierten Dienstparameter für die Kommunikationsverbindung genutzt werden, wenn eine Kommunikationsverbindung initiiert wird, wenn sich der Teilnehmer (A-Party) in dem Vorzugsgebiet (6) aufhält.

2. Verfahren nach Anspruch 1, wobei der Teilnehmer (A-Party) den Aufbau der Kommunikationsverbindung initiiert.

3. Verfahren nach Anspruch 1 oder Anspruch 2, wobei die Kennung und/oder die mit der Kennung aktivierbaren Dienstparameter für die Nutzung einer Kommunikationsverbindung eine zeitlich begrenzte Gültigkeit haben.

4. Verfahren nach Anspruch 3, wobei durch eine zeitliche Gültigkeit bezogen auf einen Monat, eine Woche, einen Tag und/oder in einem Bereich von einer Minute bis 60 Minuten.

5. Verfahren nach einem der Ansprüche 1 bis 4, wobei eine Einrichtung, von welcher der Teilnehmer (A-Party) die Kennung erhält, sich zumindest teilweise in dem Vorzugsgebiet (6) befindet.

6. Verfahren nach einem der Ansprüche 1 bis 4, wobei eine dem Teilnehmer (A-Party) die Kennung übermittelnde und/oder übergebende Einrichtung einer Waren und/oder Dienstleistungen anbietenden bzw. bereithaltenden Einrichtung zugewiesen ist.

7. Verfahren nach einem der Ansprüche 1 bis 6, wobei der Teilnehmer (A-Party) die Kennung mittels eines Kurznachrichtendienstes, SMS, des Mobilfunknetzes (1) an das Mobilfunknetz (1) übermittelt.

8. Verfahren nach einem der Ansprüche 1 bis 7, wobei das mobile Endgerät des Teilnehmers (A-Party) bei Aktivierung der gesondert einstellbaren Dienstparameter für die Kommunikationsverbindung ausschließlich die dem Vorzugsgebiet (6) zugeordnete Funkzelle bzw. zugeordneten Funkzellen nutzt.

9. Verfahren nach einem der Ansprüche 1 bis 8, wobei dem Teilnehmer (A-Party) die Nutzung aktivierter Dienstparameter für die Kommunikationsverbindung im Rahmen der Kommunikationsverbindung signalisiert wird.

10. Verfahren nach Anspruch 9, wobei die Signalisierung in optischer und/oder akustischer Form seitens des mobile Endgerätes des Teilnehmers (A-Party) erfolgt.

11. Verfahren nach Anspruch 9 oder Anspruch 10, wobei die Signalisierung durch eine akustische Wiedergabe einer Sprachmitteilung erfolgt.

12. Verfahren nach Anspruch 11, wobei die Sprachmitteilung wenigstens eine Information, vorzugsweise eine Werbeinformation, bezogen auf die die Kennung übermittelnde und/oder übergebende Einrichtung beinhaltet.

13. Verfahren nach einem der Ansprüche 9 bis 12, wobei die Signalisierung vor und/oder mit dem Aufbau der Kommunikationsverbindung und/oder während der aufgebauten Kommunikationsverbindung erfolgt.

14. Verfahren nach einem der Ansprüche 1 bis 13, wobei die Kommunikationsverbindung beendet wird, wenn der Teilnehmer (A-Party) das Vorzugsgebiet (6) verlässt.

15. Verfahren nach einem der Ansprüche 1 bis 14, wobei die Nutzung der aktivierten Dienstparameter für die Kommunikationsverbindung deaktiviert wird, wenn der Teilnehmer (A-Party) das Vorzugsgebiet (6) verlässt.

16. Verfahren nach Anspruch 15, wobei dem Teilnehmer (A-Party) die Deaktivierung im Rahmen der Kommunikationsverbindung signalisiert wird.

17. Verfahren nach Anspruch 16, wobei die Signalisierung in optischer und/oder akustischer Form seitens des mobile Endgerätes des Teilnehmers (A-Party) erfolgt.

18. Verfahren nach Anspruch 16 oder Anspruch 17, wobei die Signalisierung durch eine akustische Wiedergabe einer Sprachmitteilung erfolgt.

19. Verfahren nach Anspruch 18, wobei die Sprachmitteilung wenigstens eine Information, vorzugsweise eine Werbeinformation, bezogen auf eine die Kennung übermittelnde und/oder übergebende Einrichtung beinhaltet.

20. Verfahren nach einem der Ansprüche 16 bis 19, wobei die Signalisierung während der aufgebauten Kommunikationsverbindung erfolgt.

21. Netzknoten zur Verwendung in einem ein Versorgungsgebiet mit einer aus Funkzellen (2, 3, 4, 5, 6) aufgebauten zellularen Netzstruktur ausbildenden Mobilfunknetz (1), insbesondere einem Mobilfunknetz (1) gemäß einem GSM-GPRS- und/oder UMTS-Funknetzstandard, welcher an einer Sprachkommunikationsverbindung zwischen Teilnehmern (A-Party, B-Party) zumindest teilweise beteiligt ist, **dadurch gekennzeichnet, dass** dieser ausgebildet und/oder eingerichtet ist ein Verfahren nach einem der Ansprache 1 bis 20 zumindest teilweise auszuführen.

22. Netzknoten nach Anspruch 21, wobei dieser ein Netzknoten in einem Vorzugsgebiet (6) des Versorgungsgebiets des Mobilfunknetzes (1) ist.

23. Netzknoten nach Anspruch 21 oder Anspruch 22, wobei dieser ein Netzknoten einer Mikro- bzw. Picozelle des Mobilfunknetzes (1) ist.

## Revendications

1. Procédé de commande de paramètres de service pour l'utilisation d'une liaison de communication pour échanger des mots, tels que des paroles/du langage, et/ou des données entre des abonnés (partie A, partie B), dans lequel un abonné (partie A) utilise un terminal mobile fonctionnant dans un réseau radio mobile (1) qui forme une zone de service ayant une structure de réseau cellulaire composée de cellules radio (2, 3, 4, 5, 6) pour la liaison de communication et au moins une zone de préférence (6) est configurée par le réseau radio mobile (1), laquelle zone est au moins partiellement située dans la zone de service du réseau radio mobile (1), dans laquelle zone de préférence (6) il est possible de configurer des paramètres de service séparément ajustables pour l'utilisation d'une liaison de communication pour au moins un abonné (partie A), si celui-ci se trouve dans la zone de préférence (6),
dans lequel un dispositif transmet et/ou fournit un identificateur pour la commande de paramètres de service séparément ajustables pour l'utilisation d'une liaison de communication dans la zone de préférence (6) à au moins un abonné (partie A), l'abonné (partie A) transmet l'identificateur au réseau radio mobile (1) par moyen d'un service de messages du réseau radio mobile (1) avant et/ou lors de l'initiation d'une liaison de communication, le réseau radio mobile (1) attribue l'identificateur au MSISDN de l'abonné (partie A), configure et active des paramètres de service séparément ajustables pour l'utilisation d'une liaison de communication dans la zone de préférence (6) selon l'identificateur transmis, et les paramètres de service activés seront utilisés pour la liaison de communication, si une liaison de communication est initiée quand l'abonné (partie A) se trouve dans la zone de préférence (6).

2. Procédé selon la revendication 1, dans lequel l'abonné (partie A) initie l'établissement de la liaison de communication.

3. Procédé selon la revendication 1 ou la revendication 2, dans lequel l'identificateur et/ou les paramètres de service qui peuvent être activés par moyen de l'identificateur pour l'utilisation d'une liaison de communication ont une durée limitée.

4. Procédé selon la revendication 3, dans lequel la durée limitée est un mois, une semaine, un jour et/ou une durée comprise entre une minute et 60 minutes.

5. Procédé selon l'une des revendications 1 à 4, dans lequel une institution où l'abonné (partie A) reçoit l'identificateur est au moins partiellement située dans la zone de préférence (6).

6. Procédé selon l'une des revendications 1 à 4, dans lequel un dispositif transmettant et/ou fournissant l'identificateur à l'abonné (partie A) est attribué à une institution qui offre ou fournit des marchandises et/ou des services.

7. Procédé selon l'une des revendications 1 à 6, dans lequel l'abonné (partie A) transmet l'identificateur par moyen d'un service de messages courts, SMS, du réseau radio mobile (1) au réseau radio mobile (1).

8. Procédé selon l'une des revendications 1 à 7, dans lequel quand les paramètres de service séparément ajustables sont activés, le terminal mobile de l'abonné (partie A) utilisera exclusivement la cellule radio ou les cellules radio attribuées à la zone de préférence (6) pour la liaison de communication.

9. Procédé selon l'une des revendications 1 à 8, dans lequel l'utilisation de paramètres de service activés pour la liaison de communication est signalisée à l'abonné (partie A) dans le cadre de la liaison de communication.

10. Procédé selon la revendication 9, dans lequel la signalisation est réalisée de manière optique et/ou acoustique par moyen du terminal mobile de l'abonné (partie A).

11. Procédé selon la revendication 9 ou la revendication 10, dans lequel la signalisation est réalisée par une reproduction acoustique d'un message vocal.

12. Procédé selon la revendication 11, dans lequel le message vocal contient au moins une information, de préférence une information publicitaire, par rapport à une institution qui transmet et/ou fournit l'identificateur.

13. Procédé selon l'une des revendications 9 à 12, dans lequel la signalisation est réalisée avant et/ou lors de l'établissement de la liaison de communication et/ou pendant la liaison de communication établie.

14. Procédé selon l'une des revendications 1 à 13, dans lequel la liaison de communication sera terminée si l'abonné (partie A) quitte la zone de préférence (6).

15. Procédé selon l'une des revendications 1 à 14, dans lequel l'utilisation des paramètres de service activés pour la liaison de communication sera désactivée, si l'abonné (partie A) quitte la zone de préférence (6).

16. Procédé selon la revendication 15, dans lequel la désactivation est signalisée à l'abonné (partie A) dans le cadre de la liaison de communication.

17. Procédé selon la revendication 16, dans lequel la signalisation est réalisée de manière optique et/ou acoustique par moyen du terminal mobile de l'abonné (partie A).

18. Procédé selon la revendication 16 ou la revendication 17, dans lequel la signalisation est réalisée par une reproduction acoustique d'un message vocal.

19. Procédé selon la revendication 18, dans lequel le message vocal contient au moins une information, de préférence une information publicitaire, par rapport à une institution qui transmet et/ou fournit l'identificateur.

20. Procédé selon l'une des revendications 16 à 18, dans lequel la signalisation est réalisée pendant la liaison de communication établie.

21. Noeud de réseau destiné à l'utilisation dans un réseau radio mobile (1) qui forme une zone de service ayant une structure de réseau cellulaire composée de cellules radio (2, 3, 4, 5, 6), notamment un réseau radio mobile (1) selon un standard de réseau radio GSM, GPRS et/ou UMTS, lequel noeud est au moins partiellement impliqué dans une liaison de communication vocale entre des abonnés (partie A, partie B), **caractérisé en ce que** ledit noeud est configuré pour et/ou adapté à exécuter un procédé selon l'une des revendications 1 à 20.

22. Noeud de réseau selon la revendication 21, dans lequel celui-ci est un noeud de réseau dans une zone de préférence (6) de la zone de service du réseau radio mobile (1).

23. Noeud de réseau selon la revendication 21 ou la revendication 22, dans lequel celui-ci est un noeud de réseau d'une micro- ou pico-cellule (6) du réseau radio mobile (1).
